# EUROPÄISCHE PATENTSCHRIFT

(11) **EP 3 276 879 B1**
(45) Veröffentlichungstag und Bekanntmachung des Hinweises auf die Patenterteilung: **17.06.2020**
(21) Anmeldenummer: 16181176.5
(22) Anmeldetag: 26.07.2016
(51) Int. Cl.: H04L 9/32, H04L 9/00

(54) **VERFAHREN ZUM BETREIBEN EINER ANORDNUNG, DIE EINE UNTERSTATION UND ZUMINDEST EIN DARAN ANGESCHLOSSENES ENDGERÄT UMFASST**
METHOD FOR OPERATING AN ASSEMBLY COMPRISING A SUBSTATION AND AT LEAST ONE TERMINAL CONNECTED THERETO
PROCEDE DE FONCTIONNEMENT D'UN SYSTEME COMPRENANT UNE STATION SECONDAIRE ET AU MOINS UN APPAREIL TERMINAL Y ETANT RACCORDE

(43) Veröffentlichungstag der Anmeldung: 31.01.2018
(73) Patentinhaber: Siemens Aktiengesellschaft, 80333 München (DE)
(72) Erfinder: Eh, Jan, 90469 Nürnberg (DE); Fries, Steffen, 85598 Baldham (DE); Güttinger, Andreas, 90765 Fürth (DE); Lambio, Marco, 90552 Röthenbach a. d. Pegnitz (DE)

(56) Entgegenhaltungen:
- US-A- 4 888 801
- KAPIDZIC N ET AL: "A Certificate Management System: structure, functions and protocols", NETWORK AND DISTRIBUTED SYSTEM SECURITY, 1995., PROCEEDINGS OF THE SYM POSIUM ON SAN DIEGO, CA, USA 16-17 FEB. 1995, LOS ALAMITOS, CA, USA,IEEE COMPUT. SOC, 16. Februar 1995 (1995-02-16), Seiten 153-160, XP010134531, DOI: 10.1109/NDSS.1995.390637 ISBN: 978-0-8186-7027-5

## Beschreibung

Die Erfindung bezieht sich auf ein Verfahren zum Betreiben einer Anordnung, die eine Unterstation und zumindest ein an die Unterstation angeschlossenes Endgerät umfasst, wobei im Rahmen des Verfahrens das zumindest eine Endgerät mit einem Endgerätezertifikat und einem korrespondierenden privaten Schlüssel ausgestattet wird, das eine signierte Datenübertragung ermöglicht, die Unterstation als Zertifikatsaussteller angibt, eine Signatur der Unterstation aufweist und einen Verweis auf einen öffentlichen Schlüssel des Endgeräts enthält.

Anordnungen dieser Art sind beispielsweise auf dem Gebiet der Automatisierungstechnik, insbesondere auf dem Gebiet der elektrischen Energieverteilung, bekannt. Im letztgenannten Falle kann die Unterstation beispielsweise eine Energieverteilunterstation und das Endgerät eine elektrische Mess-, Überwachungs- und/oder Schutzeinrichtung bilden.

Bei Automatisierungssystemen wird heutzutage in der Regel mittels offener Protokolle wie beispielsweise IP (Internet Protokol), TCP (Transport Control Protocol), UDP (User Datagram Protocol), http (Hypertext Transfer Protocol) oder CoAP (Constraint Application Protocol) kommuniziert. Werden in diesem Kontext Sicherheitsprotokolle verwendet, so setzen diese meist auf asymmetrischen Schlüsseln auf (Digitales Zertifikat mit öffentlichem Schlüssel, private Schlüssel), um entweder den Server zu authentisieren oder beide Teilnehmer zu authentisieren. Digitale Zertifikate, z. B. nach dem Standard X.509, können dabei zur Authentisierung von Personen, Geräten und Softwareprozessen verwendet werden. Das digitale Zertifikat eines Kommunikationspartners kann validiert werden, um zu prüfen, ob es gültig ist. Dazu wird, neben der Prüfung der Informationen im Zertifikat unter anderem der Zertifikatspfad (fachsprachlich "certificate path") ausgewertet, um zu prüfen, ob das Zertifikat aus einer vertrauenswürdigen Quelle stammt. Das Zertifikat wird als gültig anerkannt, wenn der Zertifikatspfad bei einem als vertrauenswürdig hinterlegten Wurzelzertifikat (fachsprachlich RootCA (Root Certificate Authority = Wurzelzertifikatsautorität) endet. Für die Zertifikatsvalidierung wird in der Regel vorab eine Menge an vertrauenswürdigen Wurzelzertifikaten (fachsprachlich "trusted root CA") abgespeichert. Jedes Zertifikat, bei dem der Zertifikatspfad bei einem vertrauenswürdigen Wurzelzertifikat endet, kann als vertrauenswürdig akzeptiert werden.

Weitere Ansätze aus dem Stand der Technik sind in den Dokumenten US 4 888 801 A und KAPIDZIC N ET AL: "A Certificate Management System: structure, functions and protocols", NETWORK AND DISTRIBUTED SYSTEM SECURITY, 1995, gezeigt.

Wird die Gerätekonfiguration geändert, beispielsweise weil die Anordnung erweitert wird, kann eine Änderung von RootCAs oder auch eine Änderung der Hierarchie der RootCAs (damit ergibt sich ein anderer Zertifikatspfad) notwendig werden.

Der Erfindung liegt die Aufgabe zugrunde, ein Verfahren zum Betreiben einer Anordnung der oben beschriebenen Art anzugeben, das einen Anschluss einer zusätzlichen Leitstelle mit geringem Aufwand ermöglicht.

Diese Aufgabe wird erfindungsgemäß durch ein Verfahren mit den Merkmalen gemäß Patentanspruch 1 sowie eine Anordnung gemäß Patentanspruch 10 gelöst. Vorteilhafte Ausgestaltungen des Verfahrens sowie der Anordnung sind in Unteransprüchen angegeben.

Danach ist erfindungsgemäß vorgesehen, dass nach Anschluss einer Leitstelle an die Unterstation die Leitstelle den öffentlichen Schlüssel der Unterstation rezertifiziert, indem sie für die Unterstation ein den öffentlichen Schlüssel der Unterstation enthaltendes, signiertes Zertifikat erstellt, zur Authentifizierung von Daten, die von dem zumindest einen Endgerät zu einem anderen Endgerät, zur Unterstation und/oder zur Leitstelle übertragen werden oder werden sollen, das Endgerätezertifikat, das die Unterstation als Zertifikatsaussteller angibt, zu dem anderen Endgerät, zur Unterstation und/oder zur Leitstelle übermittelt wird und die empfängerseitige, also endgerätseitige, unterstationsseitige und/oder leitstellenseitige, Zertifikatsüberprüfung des Endgerätezertifikats und/oder die Authentifizierung der mit dem korrespondierenden privaten Schlüssel signierten Daten auf der Basis des rezertifizierten öffentlichen Schlüssels der Unterstation erfolgt.

Ein wesentlicher Vorteil des erfindungsgemäßen Verfahrens besteht darin, dass für die Endgeräte keine neuen Endgerätezertifikate ausgestellt werden müssen, die dem Umstand des Anschlusses der Leitstelle Rechnung tragen, weil nämlich der öffentliche Schlüssel der Unterstation aufgrund des durch die Leitstelle ausgestellten Zertifikats, also aufgrund der Rezertifizierung, beibehalten bzw. weiter benutzt werden kann. Die Weiterbenutzung der alten Endgerätezertifikate ist möglich, obwohl bei den alten Endgerätezertifikaten - aufgrund ihrer Vorgeschichte - der sonst nötige Wurzelverweis auf die Leitstelle bzw. ein auf die Leitstelle verweisendes gültiges Wurzelzertifikat fehlt; die Weiterbenutzung wird erfindungsgemäß möglich, weil die Leitstelle - die durch den Anschluss als neue Wurzelzertifikatsautorität fungiert - durch die Rezertifizierung der Unterstation(en) allen Kommunikationsteilnehmern bestätigt, dass die früher von der Unterstation (bzw. den Unterstationen) ausgestellten Zertifikate weiterhin als vertrauenswürdig eingestuft werden sollen, obwohl diese Zertifikate hinsichtlich des Wurzelzertifikats nicht mehr vollständig sind. Durch die Rezertifizierung wird es in vorteilhafter Weise also auch möglich, dass Endgeräte, die an unterschiedliche Unterstationen angeschlossen sind, auf der Basis ihrer alten Endgerätezertifikate miteinander verschlüsselt und/oder digital signiert kommunizieren können, obwohl die verwendeten Endgerätezertifikate aus einer Zeit vor dem Anschluss der Leitstelle stammen und somit kein auf die neue Leitstelle weisendes Wurzelzertifikat aufweisen.

Die Tatsache der erfolgten Rezertifizierung wird vorzugsweise durch Abspeicherung an einem zentralen Speicherort allen Kommunikationsteilnehmern zugänglich gemacht.

Vor dem Anschluss der Leitstelle an die Unterstation können zwei oder mehr Endgeräte - nachfolgend Endgeräte erster Konfigurationsart genannt - an die Unterstation angeschlossen sein, bei denen das Endgerätezertifikat jeweils die Unterstation als Zertifikatsaussteller angibt und die Zertifikatskette bei der Unterstation als Zertifikatsaussteller endet.

Nach dem Anschluss der Unterstation an die Leitstelle erfolgt die Ausstellung von Zertifikaten für die Unterstation typischerweise durch die Leitstelle als zusätzliche Instanz. Bei der Zertifikatsüberprüfung und/oder der Signaturüberprüfung bei Daten, die von den Endgeräten erster Konfigurationsart gesendet werden oder worden sind, die Überprüfung der Zertifikatskette auch nach Anschluss der Leitstelle vorzugsweise weiterhin jeweils nur bis zur Unterstation als Zertifikatsaussteller der Endgerätezertifikate.

Wird nach dem Anschluss der Leitstelle an die Unterstation ein weiteres Endgerät an die Unterstation angeschlossen, so ist es vorteilhaft, wenn das weitere Endgerät - vor, während oder nach dem Anschluss - mit einem Endgerätezertifikat ausgestattet wird, das eine signierte Datenübertragung ermöglicht, die Unterstation als Zertifikatsaussteller angibt, eine Signatur der Unterstation aufweist und einen Verweis auf einen öffentlichen Schlüssel des Endgeräts enthält. Mit anderen Worten kann das weitere Endgerät mit einem Endgerätezertifikat ausgestattet werden, das den Endgerätezertifikaten der bereits vorher angeschlossenen Endgeräte erster Konfigurationsart entspricht.

In dem oder den weiteren Geräten, die nach bereits erfolgtem Anschluss der Leitstelle an die Unterstation angeschlossen werden, ist jeweils der öffentliche Schlüssel der Unterstation vorzugsweise bereits abgespeichert; alternativ wird er vorzugsweise während oder nach dem Anschluss dort abgespeichert.

Nach dem Anschluss der Leitstelle an die Unterstation und einem nachfolgenden Anschluss zumindest eines weiteren Endgeräts an die Unterstation erfolgt bei der Zertifikatsüberprüfung und/oder der Signaturüberprüfung bei solchen Daten, die von dem weiteren Endgerät zur Leitstelle, zur Unterstation, zu einem anderen weiteren Endgerät und/oder zu einem Endgerät erster Konfigurationsart übertragen werden, die Überprüfung der Zertifikatskette vorzugsweise jeweils nur bis zur Unterstation als Zertifikatsaussteller des Endgerätezertifikats.

Bei einer weiteren Ausgestaltung des Verfahrens ist vorgesehen, dass nach erfolgtem Anschluss der Leitstelle an die Unterstation zumindest ein Endgerät - nachfolgend Endgerät zweiter Konfigurationsart genannt - an die Unterstation angeschlossen wird, bei dem die Unterstation als Zertifikatsaussteller in der Zertifizierungskette angegeben ist bzw. wird. Im Endgerätezertifikat ist vorzugsweise außerdem ein Unterstationszertifikat enthalten oder es wird auf ein solches referenziert, das als Zertifikatsaussteller die Leitstelle enthält; dadurch wird erreicht, dass in der Zertifikatskette sowohl ein den öffentlichen Schlüssel der Unterstation enthaltendes Zwischenzertifikat als auch ein den öffentlichen Schlüssel der Leitstelle enthaltendes Wurzelzertifikat enthalten oder referenziert ist.

Im Falle, dass ein Endgerät zweiter Konfigurationsart eine mit seinem Endgerätezertifikat versehene und/oder eine mit zum Endgerätezertifikat korrespondierenden privaten Schlüssel signierte Nachricht an ein anderes an die Unterstation angeschlossenes Endgerät, insbesondere ein Endgerät erster Konfigurationsart, sendet, ist es vorteilhaft, wenn das die Nachricht empfangende Endgerät die Zertifikatsüberprüfung auf der Basis des den öffentlichen Schlüssel der Unterstation enthaltenden Zwischenzertifikats durchführt und das den öffentlichen Schlüssel der Leitstelle enthaltende Wurzelzertifikat bei der Authentizitätsprüfung unberücksichtigt lässt.

Im Falle, dass ein Endgerät erster Konfigurationsart eine mit seinem Endgerätezertifikat versehene und/oder mit diesem signierte Nachricht an ein anderes an die Unterstation angeschlossenes Endgerät sendet, ist es vorteilhaft, wenn das die Nachricht empfangende Endgerät die Zertifikatsüberprüfung auf der Basis des öffentlichen Schlüssels durchführt, der in der die Unterstation als Zertifikatsaussteller angebenden Endgerätezertifikatskette enthalten ist oder das es lokal gespeichert hat.

Im Falle, dass ein Endgerät erster Konfigurationsart eine mit seinem Endgerätezertifikat versehene und/oder eine mit zum Endgerätezertifikat korrespondierenden privaten Schlüssel signierte Nachricht an ein Endgerät zweiter Konfigurationsart sendet, ist es vorteilhaft, wenn das Endgerät zweiter Konfigurationsart die Zertifikatsüberprüfung durchführt unter Berücksichtigung des öffentlichen Schlüssels, der in dem die Unterstation als Zertifikatsaussteller angebenden Endgerätezertifikat des Endgeräts erster Konfigurationsart enthalten ist, sowie auf der Basis des öffentlichen Schlüssels der Unterstation, der in dem Endgerät zweiter Konfigurationsart bereits abgespeichert oder referenziert ist.

Läuft die Gültigkeit der Endgerätezertifikate wegen eines vorgegebenen Ablaufdatums nach dem Anschluss der Leitstelle ab, so ist es vorteilhaft, wenn bei der Neuausstellung von Endgerätezertifikaten dem zwischenzeitlichen Anschluss der Leitstelle Rechnung getragen wird und Endgerätezertifikate erstellt werden, bei denen die jeweilige Unterstation als Zertifikatsaussteller in der Zertifizierungskette angegeben ist, im Endgerätezertifikat ein Unterstationszertifikat enthalten ist oder auf ein solches referenziert wird, das als Zertifikatsausteller die Leitstelle enthält, und in der Zertifikatskette sowohl ein den öffentlichen Schlüssel der jeweiligen Unterstation enthaltendes Zwischenzertifikat als auch ein den öffentlichen Schlüssel der Leitstelle enthaltendes Wurzelzertifikat enthalten oder referenziert ist.

Als Anordnung wird vorzugsweise eine elektrische Energieverteilanordnung betrieben; in einem solchen Falle bildet die Unterstation vorzugsweise eine Energieverteilunterstation, das Endgerät eine elektrische Mess-, Überwachungs- und/oder Schutzeinrichtung und die Leitstelle eine Energieverteilleitstelle.

Die Erfindung bezieht sich außerdem auf eine Anordnung mit einer Unterstation und zumindest einem an die Unterstation angeschlossenen Endgerät, wobei das zumindest eine Endgerät mit einem Endgerätezertifikat ausgestattet ist, das eine signierte Datenübertragung ermöglicht, die Unterstation als Zertifikatsaussteller angibt, eine Signatur der Unterstation aufweist und den öffentlichen Schlüssel des Endgeräts enthält.

Erfindungsgemäß ist vorgesehen, dass an die Unterstation eine Leitstelle angeschlossen ist, die den öffentlichen Schlüssel der Unterstation rezertifiziert hat, indem sie diesen als ein von ihr ausgestelltes Zertifikat signiert hat, und das zumindest eine Endgerät derart ausgestaltet ist, dass es Daten, die zu einem anderen Endgerät, zur Unterstation und/oder zur Leitstelle übertragen werden sollen, mit seinem zum Endgerätezertifikat korrespondierenden privaten Schlüssel, der die Unterstation als Zertifikatsaussteller angibt, signiert.

Bezüglich der Vorteile der erfindungsgemäßen Anordnung sei auf die oben erläuterten Vorteile des erfindungsgemäßen Verfahrens verwiesen, die für die Anordnung entsprechend gelten.

Die Leitstelle ist vorzugsweise derart ausgestaltet, dass sie die leitstellenseitige Überprüfung des Endgerätezertifikats und/oder die Authentifizierung der mit dem korrespondierenden privaten Schlüssel signierten Daten auf der Basis des rezertifizierten öffentlichen Schlüssels der Unterstation durchführt.

Die Erfindung wird nachfolgend anhand von Ausführungsbeispielen näher erläutert, dabei zeigen beispielhaft
- Figur 1: eine Anordnung mit zwei voneinander getrennten Unterstationen, an die jeweils Endgeräte angeschlossen sind,
- Figur 2: die Anordnung gemäß Figur 1, nachdem an die zwei Unterstationen eine übergeordnete Leitstelle angeschlossen wurde,
- Figur 3: die Anordnung gemäß Figur 2, nachdem an eine der zwei Unterstationen ein weiteres Endgerät angeschlossen wurde, und
- Figur 4: die Anordnung gemäß Figur 3, nachdem an eine der zwei Unterstationen noch ein weiteres Endgerät, und zwar ein Endgerät zweiter Konfigurationsart, angeschlossen wurde.

In den Figuren werden der Übersicht halber für identische oder vergleichbare Komponenten stets dieselben Bezugszeichen verwendet.

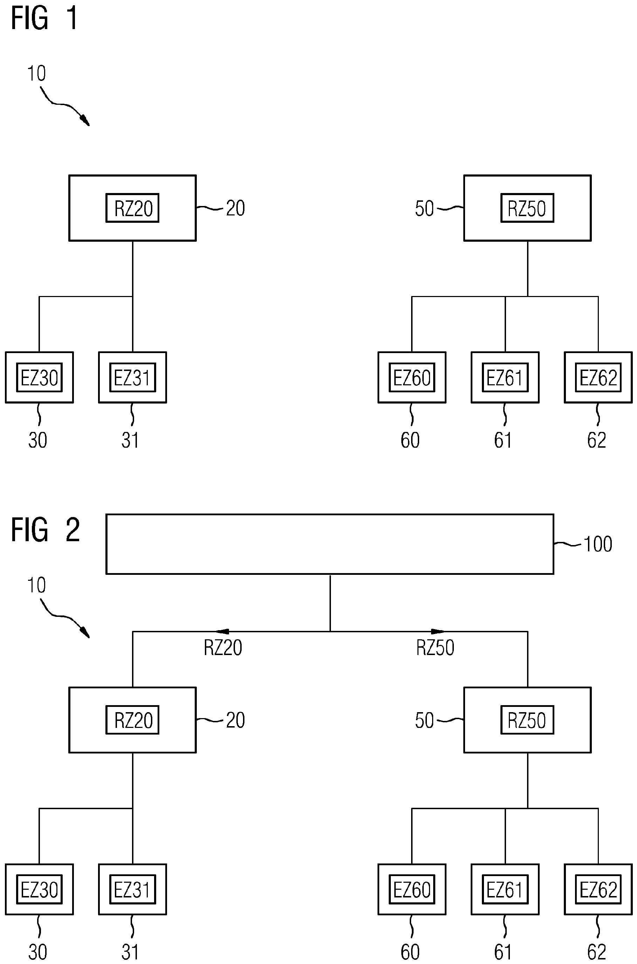

Die Figur 1 zeigt eine Anordnung 10, die eine Unterstation 20 und zwei an die Unterstation 20 angeschlossene Endgeräte 30 und 31 umfasst. Die Endgeräte 30 und 31 sind jeweils mit einem Endgerätezertifikat EZ30 bzw. EZ31 und einem korrespondierenden privaten Schlüssel ausgestattet, das eine signierte Datenübertragung ermöglicht, die Unterstation 20 als Zertifikatsaussteller angibt, eine Signatur der Unterstation 20 aufweist und einen öffentlichen Schlüssel des jeweiligen Endgeräts enthält. Mittels ihrer Endgerätezertifikate EZ30 und EZ31 und der korrespondierenden privaten Schlüssel können die Endgeräte 30 und 31 in verschlüsselter und/oder in signierter Form miteinander und mit der ihr übergeordneten Unterstation 20 kommunizieren.

Die Anordnung 10 weist darüber hinaus eine weitere Unterstation 50 auf, an die Endgerät 60, 61 und 62 angeschlossen sind. Die Endgeräte 60 bis 62 sind jeweils mit einem Endgerätezertifikat EZ60, EZ61 bzw. EZ62 und einem korrespondierenden privaten Schlüssel ausgestattet, das eine signierte Datenübertragung ermöglicht, die Unterstation 50 als Zertifikatsaussteller angibt, eine Signatur der Unterstation 50 aufweist und den öffentlichen Schlüssel des jeweiligen Endgeräts enthält. Mittels ihrer Endgerätezertifikate EZ60, EZ61 und EZ61 und den korrespondierenden privaten Schlüsseln können die Endgeräte 60 bis 62 in verschlüsselter und/oder in signierter Form miteinander und mit der ihr übergeordneten Unterstation 50 kommunizieren.

Die Figur 2 zeigt die Anordnung 10 gemäß Figur 1, nachdem eine Leitstelle 100 an die beiden Unterstationen 20 und 50 angeschlossen wurde. Nachfolgend wird anhand eines Ausführungsbeispiels erläutert, wie vorgegangen werden kann, um eine verschlüsselte und/oder signierte Kommunikation der Endgeräte 30 und 31 sowie 60, 61 und 62 mit der Leitstelle 100, der jeweils eigenen und der jeweils anderen Unterstation 20 bzw. 50 und sogar mit den Endgeräten der jeweils anderen Unterstation zu ermöglichen.

Nach Anschluss der Leitstelle 100 an die Unterstationen 20 und 50 wird die Leitstelle 100 den öffentlichen Schlüssel der Unterstationen 20 und 50 jeweils rezertifizieren, indem sie für die jeweilige Unterstation ein den öffentlichen Schlüssel der Unterstation enthaltendes, signiertes Zertifikat RZ20 bzw. RZ50 - nachfolgend auch rezertifiziertes Zertifikat RZ20 bzw. RZ50 genannt - ausstellt. Die Zertifikate RZ20 bzw. RZ50 werden vorzugsweise an einer zentralen Stelle allen an die Leitstelle angeschlossenen Endgeräten und Unterstationen bekannt und zugänglich gemacht.

Die Rezertifizierung ermöglicht es nun, zur Authentifizierung von Daten, die beispielsweise von einem Endgerät 30, 31, 60-62 zu einem anderen Endgerät, zur Unterstation 20 bzw. 50 und/oder zur Leitstelle 100 übertragen werden oder werden sollen, weiterhin jeweils das alte Endgerätezertifikat EZ30, EZ31, EZ60, EZ61 bzw. EZ62 zu verwenden, weil eine empfängerseitige, also endgerätseitige, unterstationsseitige und/oder leitstellenseitige, Zertifikatsüberprüfung des Endgerätezertifikats EZ30, EZ31, EZ60, EZ61 bzw. EZ62 und/oder die Authentifizierung der mit dem korrespondierenden privaten Schlüssel signierten Daten auf der Basis des öffentlichen Schlüssels der dem jeweiligen Sender übergeordneten Unterstation - also mittels des jeweiligen rezertifizierten Zertifikats RZ20 bzw. RZ50 - erfolgen kann.

Mit anderen Worten ist es nicht nötig, nur wegen des Anschlusses der Leitstelle 100 an die Unterstationen 20 und 50 alle Endgeräte 30, 31, 60-62 sofort mit neuen, an die Leitstelle 100 angepassten Zertifikaten zu versehen; dies kann zurückgestellt werden, bis die jeweilige Gültigkeitsperiode der noch vorhandenen bzw. vom dem Leitstellenanschluss erstellten Zertifikate ausläuft.

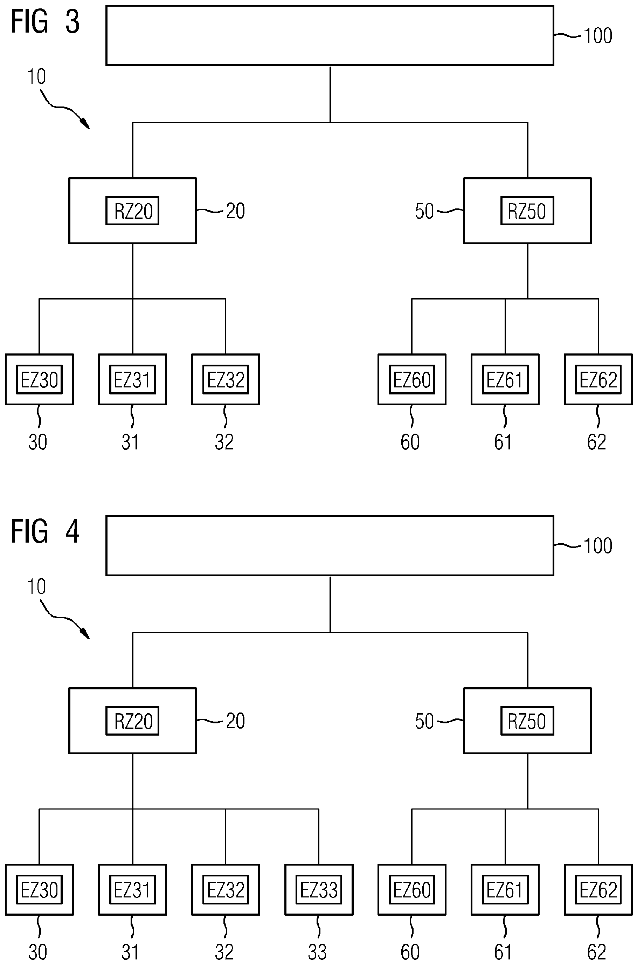

Die Figur 3 zeigt die Anordnung 10 gemäß Figur 2, nachdem nach Anschluss der Leitstelle 100 ein weiteres Endgerät 32 an die Unterstation 20 angeschlossen worden ist. Zur Ermöglichung einer Kommunikation in verschlüsselter und/oder signierter Form wird das Endgerät 32 mit einem Endgerätezertifikat EZ32 und einem korrespondierenden privaten Schlüssel ausgestattet, das eine signierte Datenübertragung ermöglicht, die Unterstation 20 als Zertifikatsaussteller angibt, eine Signatur der Unterstation 20 aufweist und den öffentlichen Schlüssel des jeweiligen Endgeräts 32 enthält. Das Endgerätezertifikat EZ32 entspricht somit vom Aufbau her den Endgerätezertifikaten EZ30 und EZ31.

Aufgrund der Rezertifizierung der Unterstationen 20 und 50 durch die Leitstelle 100 ist es möglich, dass das neue Endgerät 32 mit allen anderen Endgeräten 30, 31, 60 bis 62, den Unterstationen 20 und 50 und der Leitstelle 100 mittels seines allein unterstationsbezogenen Endgerätezertifikat EZ32 kommunizieren kann.

Die Figur 4 zeigt die Anordnung 10 gemäß Figur 3, nachdem nach Anschluss der Leitstelle 100 und des Endgeräts 32 noch ein weiteres Endgerät 33 an die Unterstation 20 angeschlossen worden ist. Zur Ermöglichung einer Kommunikation in verschlüsselter und/oder signierter Form wird das Endgerät 33 mit einem Endgerätezertifikat EZ33 und einem korrespondierenden privaten Schlüssel ausgestattet.

Bei dem Endgerätezertifikat EZ33 des Endgeräts 33 ist die Unterstation 20 als Zertifikatsaussteller in der Zertifizierungskette angegeben. Anders als bei dem Endgerät 32 enthält das Endgerätezertifikat EZ33 (oder verweist auf) ein Unterstationszertifikat, das als Zertifikatsausteller die Leitstelle 100 enthält. Mit anderen Worten ist in dem Endgerätezertifikat EZ33 eine Zertifikatskette definiert, in der sowohl ein den öffentlichen Schlüssel der Unterstation 20 enthaltendes Zwischenzertifikat als auch ein den öffentlichen Schlüssel der Leitstelle 100 enthaltendes Wurzelzertifikat enthalten ist oder referenziert wird. Bei dem Endgerät 33 handelt es sich somit um ein Endgerät, das weiter oben als Endgerät zweiter Konfigurationsart bezeichnet wurde.

Im Falle, dass das Endgerät 33 eine mit seinem Endgerätezertifikat EZ33 versehene und/oder eine mit einem zum Endgerätezertifikat korrespondierenden privaten Schlüssel signierte Nachricht an ein anderes Endgerät 30 bis 32 oder 60 bis 62 sendet, führt das die Nachricht empfangende Endgerät die Zertifikatsüberprüfung vorzugsweise allein auf der Basis des den öffentlichen Schlüssel der Unterstation 20 enthaltenden Zwischenzertifikats, also dem rezertifizierten Zertifikat RZ20, durch und lässt das den öffentlichen Schlüssel der Leitstelle 100 enthaltende Wurzelzertifikat bei der Authentizitätsprüfung unberücksichtigt. Eine solche Vorgehensweise spart Rechenzeit und Rechenleistung, ohne dass ein Sicherheitsdefizit in Kauf genommen werden muss.

Entsprechendes gilt für den Fall, dass eines der Endgeräte 30 bis 32 oder 60 bis 62 eine mit seinem Endgerätezertifikat versehene und/oder mit diesem signierte Nachricht an ein anderes Endgerät 30 bis 32 oder 60 bis 62 sendet; das die Nachricht empfangende Endgerät führt die Zertifikatsüberprüfung vorzugsweise allein auf der Basis des öffentlichen Schlüssels durch, der in der die jeweilige Unterstation 20 bzw. 50 als Zertifikatsaussteller angebenden Endgerätezertifikatskette enthalten ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Anordnung (10), die mindestes eine Unterstation (20, 50) und zumindest ein an die Unterstation (20, 50) angeschlossenes Endgerät (30-31, 60-61) umfasst, wobei im Rahmen des Verfahrens das zumindest eine Endgerät (30-31, 60-61) mit einem Endgerätezertifikat (EZ30, EZ31, EZ60-EZ61) und einem korrespondierenden privaten Schlüssel ausgestattet wird, das
- eine signierte Datenübertragung ermöglicht,
- die Unterstation (20, 50) als Zertifikatsaussteller eines Wurzelzertifikats angibt,
- eine Signatur der Unterstation (20, 50) aufweist und
- einen Verweis auf einen öffentlichen Schlüssel des Endgeräts (30-31, 60-61) enthält,
wobei:
- als Anordnung (10) eine elektrische Energieverteilanordnung betrieben wird,
- die Unterstation (20, 50) eine Energieverteilunterstation, das Endgerät (30-31, 60-61) eine elektrische Mess-, Überwachungs- und/oder Schutzeinrichtung und eine Leitstelle (100) eine Energieverteilleitstelle bildet,
- nach Erweiterung der Anordnung durch Anschluss der Leitstelle (100), die durch den Anschluss als neue Wurzelzertifikatsautorität der Anordnung fungiert, an die Unterstation (20, 50) die Leitstelle (100) den öffentlichen Schlüssel der Unterstation (20, 50) rezertifiziert, indem sie für die Unterstation (20, 50) ein den öffentlichen Schlüssel der Unterstation (20, 50) enthaltendes, signiertes Zertifikat (RZ20, RZ50) erstellt,
- zur Authentifizierung von Daten, die von dem zumindest einen Endgerät (30-31, 60-61) zu einem anderen Endgerät (30-31, 60-61), zur Unterstation (20, 50) und/oder zur Leitstelle (100) übertragen werden oder werden sollen, das Endgerätezertifikat (EZ30, EZ31, EZ60-EZ61), das die Unterstation (20, 50) als Wurzelzertifikatsausteller angibt, zu dem anderen Endgerät (30-31, 60-61), zur Unterstation (20, 50) und/oder zur Leitstelle (100) übermittelt wird, und
- die empfängerseitige, also endgerätseitige, unterstationsseitige und/oder leitstellenseitige, Zertifikatsüberprüfung des Endgerätezertifikats (EZ30, EZ31, EZ60-EZ61) und/oder die Authentifizierung der mit dem korrespondierenden privaten Schlüssel signierten Daten auf der Basis des rezertifizierten öffentlichen Schlüssels der Unterstation (20, 50) erfolgt.

2. Verfahren nach Anspruch 1,
**dadurch gekennzeichnet, dass**
- vor dem Anschluss der Leitstelle (100) an die Unterstation (20, 50) zwei oder mehr Endgeräte (30-31) - nachfolgend Endgeräte (30-31) erster Konfigurationsart genannt - an die Unterstation (20) angeschlossen sind, bei denen das Endgerätezertifikat (EZ30, EZ31) jeweils die Unterstation (20) als Zertifikatsaussteller angibt und die Zertifikatskette bei der Unterstation (20) als Zertifikatsaussteller endet, und
- nach erfolgtem Anschluss der Leitstelle (100) an die Unterstation (20) bei der Zertifikatsüberprüfung und/oder der Signaturüberprüfung bei Daten, die von den Endgeräten (30-31) erster Konfigurationsart gesendet werden oder worden sind, die Überprüfung der Zertifikatskette auch nach Anschluss der Leitstelle (100) weiterhin jeweils nur bis zur Unterstation (20) als Zertifikatsaussteller der Endgerätezertifikate (EZ30, EZ31) erfolgt.

3. Verfahren nach einem der voranstehenden Ansprüche,
**dadurch gekennzeichnet, dass**
- nach erfolgtem Anschluss der Leitstelle (100) an die Unterstation (20) zumindest ein weiteres Endgerät (32) an die Unterstation (20) angeschlossen wird, und
- das zumindest eine weitere Endgerät (32) - vor, während oder nach dem Anschluss - mit einem Endgerätezertifikat (EZ32) ausgestattet wird, das
- eine signierte Datenübertragung ermöglicht,
- die Unterstation (20) als Zertifikatsaussteller angibt,
- eine Signatur der Unterstation (20) aufweist und
- einen Verweis auf einen öffentlichen Schlüssel des Endgeräts (32) enthält.

4. Verfahren nach einem der voranstehenden Ansprüche,
d**adurch gekennzeichnet,** dass in dem oder den weiteren Geräten, die nach erfolgtem Anschluss der Leitstelle (100) an die Unterstation (20, 50) angeschlossen werden, jeweils der öffentliche Schlüssel der Unterstation (20) bereits abgespeichert ist oder während oder nach dem Anschluss abgespeichert wird.

5. Verfahren nach einem der voranstehenden Ansprüche,
**dadurch gekennzeichnet, dass** nach Anschluss der Leitstelle (100) an die Unterstation (20, 50) und einem nachfolgenden Anschluss zumindest eines weiteren Endgeräts an die Unterstation (20) bei der Zertifikatsüberprüfung und/oder der Signaturüberprüfung bei solchen Daten, die von dem weiteren Endgerät (32) zur Leitstelle (100), zur Unterstation (20), zu einem anderen weiteren Endgerät und/oder zu einem Endgerät (30-31) erster Konfigurationsart übertragen werden, die Überprüfung der Zertifikatskette jeweils nur bis zur Unterstation (20) als Zertifikatsaussteller des Endgerätezertifikats erfolgt.

6. Verfahren nach einem der voranstehenden Ansprüche,
**dadurch gekennzeichnet, dass**
- nach erfolgtem Anschluss der Leitstelle (100) an die Unterstation (20, 50) zumindest ein Endgerät (33) - nachfolgend Endgerät (33) zweiter Konfigurationsart genannt - an die Unterstation (20) angeschlossen wird,
- wobei bei dem Endgerätezertifikat (EZ33) des Endgeräts zweiter Konfigurationsart die Unterstation (20) als Zertifikatsaussteller in der Zertifizierungskette angegeben ist oder angegeben wird,
- wobei im Endgerätezertifikat (EZ33) ein Unterstationszertifikat enthalten ist oder auf ein solches referenziert wird, das als Zertifikatsausteller die Leitstelle (100) enthält, und
- wobei damit in der Zertifikatskette sowohl ein den öffentlichen Schlüssel der Unterstation (20) enthaltendes Zwischenzertifikat als auch ein den öffentlichen Schlüssel der Leitstelle (100) enthaltendes Wurzelzertifikat enthalten ist.

7. Verfahren nach einem der voranstehenden Ansprüche,
**dadurch gekennzeichnet, dass**
- im Falle, dass ein Endgerät (33) zweiter Konfigurationsart
- also ein Endgerät (33), bei dessen Endgerätezertifikat (EZ33) die Unterstation (20) als Zertifikatsaussteller in der Zertifizierungskette angegeben ist und bei dem das zugeordnete Unterstationszertifikat wiederum als Zertifikatsausteller die Leitstelle (100) enthält und damit in der Zertifikatskette sowohl ein den öffentlichen Schlüssel der Unterstation (20) enthaltendes Zwischenzertifikat als auch ein den öffentlichen Schlüssel der Leitstelle (100) enthaltendes Wurzelzertifikat enthalten ist - eine mit seinem Endgerätezertifikat (EZ33) versehene und/oder eine mit zum Endgerätezertifikat (EZ33) korrespondierenden privaten Schlüssel signierte Nachricht an ein anderes an die Unterstation (20) angeschlossenes Endgerät (30-32), insbesondere ein Endgerät (30-32) erster Konfigurationsart, sendet, das die Nachricht empfangende Endgerät (30-32) die Zertifikatsüberprüfung auf der Basis des den öffentlichen Schlüssel der Unterstation (20) enthaltenden Zwischenzertifikats durchführt und das den öffentlichen Schlüssel der Leitstelle (100) enthaltende Wurzelzertifikat bei der Authentizitätsprüfung unberücksichtigt lässt.

8. Verfahren nach einem der voranstehenden Ansprüche,
**dadurch gekennzeichnet, dass** im Falle, dass ein Endgerät (30-31) erster Konfigurationsart eine mit seinem Endgerätezertifikat (EZ30, EZ31) versehene und/oder mit diesem signierte Nachricht an ein anderes an die Unterstation (20) angeschlossenes Endgerät (30-33), insbesondere ein Endgerät (33) zweiter Konfigurationsart, sendet, das die Nachricht empfangende Endgerät (30-33) die Zertifikatsüberprüfung auf der Basis des öffentlichen Schlüssels durchführt, der in der die Unterstation (20) als Zertifikatsaussteller angebenden Endgerätezertifikatskette enthalten ist oder das es lokal gespeichert hat.

9. Verfahren nach einem der voranstehenden Ansprüche,
d**adurch gekennzeichnet,** dass im Falle, dass ein Endgerät (30-31) erster Konfigurationsart eine mit seinem Endgerätezertifikat (EZ30, EZ31) versehene und/oder eine mit zum Endgerätezertifikat (EZ30, EZ31) korrespondierenden privaten Schlüssel signierte Nachricht an ein Endgerät (33) zweiter Konfigurationsart sendet, das Endgerät (33) zweiter Konfigurationsart die Zertifikatsüberprüfung durchführt unter Berücksichtigung
- des öffentlichen Schlüssels, der in dem die Unterstation (20) als Zertifikatsaussteller angebenden Endgerätezertifikat (EZ30, EZ31) des Endgeräts erster Konfigurationsart enthalten ist, sowie
- auf der Basis des öffentlichen Schlüssels der Unterstation (20), der in dem Endgerät (33) zweiter Konfigurationsart bereits abgespeichert ist.

10. Anordnung (10) mit mindestens einer Unterstation (20, 50) und zumindest einem an die Unterstation (20, 50) angeschlossenen Endgerät (30-31, 60-61), wobei das zumindest eine Endgerät (30-31, 60-61) mit einem Endgerätezertifikat (EZ30, EZ31, EZ60-EZ61) und einem korrespondierenden privaten Schlüssel ausgestattet ist, das
- eine signierte Datenübertragung ermöglicht,
- die Unterstation (20, 50) als Zertifikatsaussteller eines Wurzelzertifikats angibt,
- eine Signatur der Unterstation (20, 50) aufweist und
- einen Verweis auf einen öffentlichen Schlüssel des Endgeräts enthält,
wobei:
- als Anordnung (10) eine elektrische Energieverteilanordnung betrieben wird,
- die Unterstation (20, 50) eine Energieverteilunterstation, das Endgerät (30-31, 60-61) eine elektrische Mess-, Überwachungs- und/oder Schutzeinrichtung und eine Leitstelle (100) eine Energieverteilleitstelle bildet,
- nach Erweiterung der Anordnung an die Unterstation (20, 50) die Leitstelle (100), die durch den Anschluss als neue Wurzelzertifikatsautorität der Anordnung fungiert, angeschlossen ist, die den öffentlichen Schlüssel der Unterstation (20, 50) rezertifiziert hat, indem sie diesen als ein von ihr ausgestelltes Zertifikat signiert hat, und
- das zumindest eine Endgerät (30-31, 60-61) derart ausgestaltet ist, dass es Daten, die zu einem anderen Endgerät (30-31, 60-61), zur Unterstation (20, 50) und/oder Leitstelle (100) übertragen werden sollen, mit seinem zum Endgerätezertifikat (EZ30, EZ31, EZ60-EZ61) korrespondierenden privaten Schlüssel, das die Unterstation (20, 50) als Wurzelzertifikatsausteller angibt, signiert.

11. Anordnung (10) nach Anspruch 10,
**dadurch gekennzeichnet, dass** die Leitstelle (100) derart ausgestaltet ist, dass es die leitstellenseitige Überprüfung des Endgerätezertifikats und/oder die Authentifizierung der mit dem korrespondierenden privaten Schlüssel signierten Daten auf der Basis des rezertifizierten öffentlichen Schlüssels der Unterstation (20, 50) durchführt.

## Claims

1. Method for operating an arrangement (10) comprising at least one substation (20, 50) and at least one terminal (30-31, 60-61) connected to the substation (20, 50), wherein, during the method, the at least one terminal (30-31, 60-61) is equipped with a terminal certificate (EZ30, EZ31, EZ60-EZ61) and a corresponding private key which
- enables signed data transmission,
- indicates the substation (20, 50) as the certificate issuer of a root certificate,
- has a signature of the substation (20, 50) and
- contains a reference to a public key of the terminal (30-31, 60-61),
wherein:
- an electrical energy distribution arrangement is operated as the arrangement (10),
- the substation (20, 50) forms an energy distribution substation, the terminal (30-31, 60-61) forms an electrical measuring, monitoring and/or protective device, and a control centre (100) forms an energy distribution control centre,
- after expanding the arrangement by connecting the control centre (100), which functions as the new root certificate authority of the arrangement as a result of the connection, to the substation (20, 50), the control centre (100) recertifies the public key of the substation (20, 50) by creating, for the substation (20, 50), a signed certificate (RZ20, RZ50) containing the public key of the substation (20, 50),
- in order to authenticate data which are transmitted or are intended to be transmitted from the at least one terminal (30-31, 60-61) to another terminal (30-31, 60-61), to the substation (20, 50) and/or to the control centre (100), the terminal certificate (EZ30, EZ31, EZ60-EZ61) which indicates the substation (20, 50) as the root certificate issuer is transmitted to the other terminal (30-31, 60-61), to the substation (20, 50) and/or to the control centre (100), and
- the certificate check of the terminal certificate (EZ30, EZ31, EZ60-EZ61) in the receiver, that is to say the terminal, the substation and/or the control centre, and/or the authentication of the data signed with the corresponding private key is/are carried out on the basis of the recertified public key of the substation (20, 50).

2. Method according to Claim 1,
**characterized in that**
- before the control centre (100) is connected to the substation (20, 50), two or more terminals (30-31) - called terminals (30-31) of a first configuration type below - are connected to the substation (20), in which terminals the terminal certificate (EZ30, EZ31) respectively indicates the substation (20) as the certificate issuer and terminates the certificate chain in the substation (20) as the certificate issuer, and
- after the control centre (100) has been connected to the substation (20), during the certificate check and/or the signature check for data which are transmitted or have been transmitted by the terminals (30-31) of a first configuration type, the certificate chain is also still checked after the control centre (100) has been connected, in each case only as far as the substation (20) as the certificate issuer of the terminal certificates (EZ30, EZ31).

3. Method according to one of the preceding claims, **characterized in that**
- after the control centre (100) has been connected to the substation (20), at least one further terminal (32) is connected to the substation (20), and
- the at least one further terminal (32) is equipped - before, during or after connection - with a terminal certificate (EZ32) which
- enables signed data transmission,
- indicates the substation (20) as the certificate issuer,
- has a signature of the substation (20), and
- contains a reference to a public key of the terminal (32) .

4. Method according to one of the preceding claims, **characterized in that**
the public key of the substation (20) has respectively already been stored in the further device(s), which is/are connected after the control centre (100) has been connected to the substation (20, 50), or is stored during or after connection.

5. Method according to one of the preceding claims, **characterized in that**
after the control centre (100) has been connected to the substation (20, 50) and after at least one further terminal has been subsequently connected to the substation (20), during the certificate check and/or the signature check for those data which are transmitted from the further terminal (32) to the control centre (100), to the substation (20), to another, further terminal and/or to a terminal (30-31) of a first configuration type, the certificate chain is respectively checked only as far as the substation (20) as the certificate issuer of the terminal certificate.

6. Method according to one of the preceding claims, **characterized in that**
- after the control centre (100) has been connected to the substation (20, 50), at least one terminal (33) - called terminal (33) of a second configuration type below - is connected to the substation (20),
- wherein the substation (20) has been or is indicated as the certificate issuer in the certification chain in the terminal certificate (EZ33) of the terminal of a second configuration type,
- wherein a substation certificate is contained in the terminal certificate (EZ33) or reference is made to such a substation certificate which contains the control centre (100) as the certificate issuer, and
- wherein both an intermediate circuit containing the public key of the substation (20) and a root certificate containing the public key of the control centre (100) are therefore contained in the certificate chain.

7. Method according to one of the preceding claims, **characterized in that**
- if a terminal (33) of a second configuration type - that is to say a terminal (33), the terminal certificate (EZ33) of which indicates the substation (20) as the certificate issuer in the certification chain and in which the assigned substation certificate in turn contains the control centre (100) as the certificate issuer and both an intermediate certificate containing the public key of the substation (20) and a root certificate containing the public key of the control centre (100) are therefore contained in the certificate chain - transmits a message provided with its terminal certificate (EZ33) and/or a message signed with a private key corresponding to the terminal certificate (EZ33) to another terminal (30-32) connected to the substation (20), in particular a terminal (30-32) of a first configuration type, the terminal (30-32) receiving the message carries out the certificate check on the basis of the intermediate certificate containing the public key of the substation (20) and disregards the root certificate containing the public key of the control centre (100) in the authenticity check.

8. Method according to one of the preceding claims, **characterized in that**
if a terminal (30-31) of a first configuration type transmits a message provided with its terminal certificate (EZ30, EZ31) and/or signed with the latter to another terminal (30-33) connected to the substation (20), in particular a terminal (33) of a second configuration type, the terminal (30-33) receiving the message carries out the certificate check on the basis of the public key which is contained in the terminal certificate chain indicating the substation (20) as the certificate issuer, or has locally stored it.

9. Method according to one of the preceding claims, **characterized in that**
if a terminal (30-31) of a first configuration type transmits a message, which is provided with its terminal certificate (EZ30, EZ31) and/or is signed with a private key corresponding to the terminal certificate (EZ30, EZ31), to a terminal (33) of a second configuration type, the terminal (33) of the second configuration type carries out the certificate check taking into account
- the public key which is contained in the terminal certificate (EZ30, EZ31) of the terminal of the first configuration type, which terminal certificate indicates the substation (20) as the certificate issuer, and
- on the basis of the public key of the substation (20) which has already been stored in the terminal (33) of the second configuration type.

10. Arrangement (10) having at least one substation (20, 50) and at least one terminal (30-31, 60-61) connected to the substation (20, 50), wherein the at least one terminal (30-31, 60-61) is equipped with a terminal certificate (EZ30, EZ31, EZ60-EZ61) and a corresponding private key which
- enables signed data transmission
- indicates the substation (20, 50) as the certificate issuer of a root certificate,
- has a signature of the substation (20, 50) and
- contains a reference to a public key of the terminal,
wherein:
- an electrical energy distribution arrangement is operated as the arrangement (10),
- the substation (20, 50) forms an energy distribution substation, the terminal (30-31, 60-61) forms an electrical measuring, monitoring and/or protective device and a control centre (100) forms an energy distribution control centre,
- after expanding the arrangement, the control centre (100), which acts as the new root certificate authority of the arrangement as a result of the connection, is connected to the substation (20, 50), which control centre has recertified the public key of the substation (20, 50) by signing it as a certificate issued by itself, and
- the at least one terminal (30-31, 60-61) is configured in such a manner that it signs data which are intended to be transmitted to another terminal (30-31, 60-61), to the substation (20, 50) and/or the control centre (100) with its private key which corresponds to the terminal certificate (EZ30, EZ31, EZ60-EZ61) and indicates the substation (20, 50) as the root certificate issuer.

11. Arrangement (10) according to Claim 10,
**characterized in that**
the control centre (100) is configured in such a manner that it carries out the check of the terminal certificate in the control centre and/or carries out the authentication of the data signed with the corresponding private key on the basis of the recertified public key of the substation (20, 50).

## Revendications

1. Procédé pour faire fonctionner un système (10), qui comprend au moins une sous-station (20, 50) et au moins un terminal (30-31, 60-61) raccordé à la sous-station (20, 50), dans lequel, dans le cadre du procédé, on équipe le au moins un terminal (30-31, 60-61) d'un certification (EZ30, EZ31, EZ60-EZ61) de terminal et d'une clé privée correspondante, qui
- rend possible une transmission de données signée,
- indique la sous-station (20, 50) comme émetteur de certificat d'un certification d'origine,
- a une signature de la sous-station (20, 50) et
- contient un renvoi à une clé publique du terminal (30-31, 60-61),
dans lequel
- on fait fonctionner, comme système (10), un système de distribution d'énergie électrique,
- la sous-station (20, 50) forme une station de distribution d'énergie, le terminal (30-31, 60-61) forme un dispositif électrique de mesure, de contrôle et/ou de protection et un poste (100) de commande forme un poste de commande de distribution d'énergie,
- après extension du système par raccordement du poste (100) de commande, qui, par le raccordement, sert de nouvelle autorité de certificat d'origine de l'agencement, à la sous-station (20, 50) le poste (100) de commande recertifie la clé publique de la sous-station (20, 50) en établissant, pour la sous-station (20, 50), un certificat (RZ20, RZ50) signé, contenant la clé publique de la sous-station (20, 50),
- pour l'authentification de données, qui sont transmises ou doivent l'être du au moins un terminal (30-31, 60-61) à un autre terminal (30-31, 60-61), à la sous-station (20, 50) et/ou au poste (100) de commande, on transmet le certificat (EZ30, EZ31, EZ60-EZ61) de terminal, qui indique la sous-station (20, 50) comme émetteur de certificat d'origine, à l'autre terminal (30-31, 60-61), à la sous-station (20, 50) et/ou au poste (100) de commande, et
- le contrôle de certificat du certificat (EZ30, EZ31, EZ60-EZ61) de terminal du côté du récepteur, donc du côté du terminal, du côté de la sous-station et/ou du côté du poste de commande et/ou l'authentification des données signée par la clé privée correspondante s'effectue sur la base de la clé publique recertifiée de la sous-station (20, 50).

2. Procédé suivant la revendication 1,
**caractérisé en ce que**
- avant le raccordement du poste (100) de commande à la sous-station (20, 50), deux ou plus de deux terminaux (30-31) - désignés dans ce qui suit terminaux (30-31) d'un premier type de configuration - sont raccordés à la sous-station (20), pour lesquels le certificat (EZ30, EZ31) de terminal indique, respectivement, la sous-station (20) comme émetteur de certificat et termine la chaîne de certificat à la sous-station (20) comme émetteur de certificat, et
- après le raccordement réussi du poste (100) de commande à la sous-station (20), lors du contrôle de certification et/ou du contrôle de signature pour des données, qui sont envoyées ou qui l'ont été par les terminaux (30-31) du premier type de configuration, le contrôle de la chaîne de certificat continue aussi à s'effectuer après le raccordement du poste (100) de commande, respectivement seulement jusqu'à la sous-station (20), comme émetteur de certificat des certificats (EZ30, EZ31) de terminaux.

3. Procédé suivant l'une des revendications précédentes, **caractérisé en ce que**
- après le raccordement réussi du poste (100) de commande à la sous-station (20), on raccorde au moins un autre terminal (32) à la sous-station (20), et
- on équipe le au moins un autre terminal (32) - avant, pendant ou après le raccordement - d'un certificat (EZ32) de terminal, qui
- rend possible une transmission de données signée,
- indique la sous-station (20) comme émetteur de certificat d'un certification,
- a une signature de la sous-station (20) et
- contient un renvoi à une clé publique du terminal (32).

4. Procédé suivant l'une des revendications précédentes, **caractérisé en ce que**
dans l'appareil ou dans les autres appareils, que l'on raccorde après le raccordement réussi du poste (100) de commande à la sous-station (20, 50), respectivement, la clé publique de la sous-station est déjà mise en mémoire ou on la met en mémoire pendant ou après le raccordement.

5. Procédé suivant l'une des revendications précédentes, **caractérisé en ce que**,
après le raccordement du poste (100) de commande à la sous-station (20, 50) et un raccordement venant ensuite d'au moins un autre terminal à la sous-station (20), lors du contrôle de certificat et/ou du contrôle de signature, pour des données, qui sont transmises de l'autre terminal (32) au poste (100) de commande, à la sous-station (20), à un autre terminal et/ou à un terminal (30-31) du premier type de configuration, le contrôle de la chaîne de certificat s'effectue, respectivement, seulement jusqu'à la sous-station (20) comme émetteur de certificat du certificat du terminal.

6. Procédé suivant l'une des revendications précédentes, **caractérisé en ce que**
- après le raccordement réussi du poste (100) de commande à la sous-station (20, 50), on raccorde au moins un terminal (33) - désigné dans ce qui suit terminal (33) du deuxième type de configuration - à la sous-station (20),
- dans lequel, pour le certificat (EZ33) de terminal du terminal du deuxième type de configuration, la sous-station (20) est indiquée comme émetteur de certificat dans la chaîne de certification ou on l'indique,
- dans lequel, dans le certificat (EZ33) de terminaux, un certificat de sous-station est contenu ou on se réfère à un certificat de ce genre, qui contient, comme émetteur de certificat, le poste (100) de commande, et
- dans lequel, ainsi, dans la chaîne de certificat, est contenu à la fois un certificat intermédiaire contenant la clé publique de la sous-station (20) et un certificat d'origine contenant la clé publique du poste (100) de commande.

7. Procédé suivant l'une des revendications précédentes, **caractérisé en ce que**
- dans le cas où un terminal (33) du deuxième type de configuration - donc un terminal (33), dans le certificat (EZ33) de terminaux duquel la sous-station (20) est indiquée comme émetteur de certificat dans la chaîne de certification et dans lequel le certificat de sous-station associé contient à nouveau, comme émetteur de certificat, le poste (100) de commande et, ainsi il est contenu dans la chaîne de certification, à la fois un certificat intermédiaire contenant la clé publique de la sous-station (20) et un certificat d'origine contenant la clé publique du poste (100) de commande - envoie un message pourvu de son certificat (EZ33) de terminaux et/ou signé d'une clé privée correspondant au certificat (EZ33) de terminaux à un autre terminal (30-32) raccordé à la sous-station (20), notamment à un terminal (30-32) du premier type de configuration, le terminal (30-32) recevant le message effectue le contrôle de certificat sur la base du certificat intermédiaire contenant la clé publique de la sous-station (20) et ne prend pas en considération, lors du contrôle d'authentification, le certificat d'origine contenant la clé publique du poste (100) de commande.

8. Procédé suivant l'une des revendications précédentes, **caractérisé en ce que**,
dans le cas où un terminal (30-31) du premier type de configuration envoie un message, pourvu de son certificat (EZ30, EZ31) de terminaux et/ou signé par celui-ci, à un autre terminal (30-33) raccordé à la sous-station (20), notamment à un terminal (33) du deuxième type de configuration, le terminal (30-33) recevant le message effectue les contrôle de certificat sur la base de la clé publique, qui est contenue dans la chaîne de certificat de terminaux indiquant la sous-station (20) comme émetteur de certificat ou qu'il a mise en mémoire localement.

9. Procédé suivant l'une des revendications précédentes, **caractérisé en ce que**,
dans le cas où un terminal (30-31) du premier type de configuration envoie un message pourvu de son certificat (EZ30, EZ31) de terminaux et/ou signé d'une clé publique correspondant au certificat (EZ30-EZ31) de terminaux à un terminal (33) du deuxième type de configuration, le terminal (33) du deuxième type de configuration effectue le contrôle de certificat en tenant compte
- de la clé publique, qui est contenue dans le certificat (EZ30, EZ31) de terminaux, indiquant la sous-station (20) comme émetteur de certificat, du terminal du premier type de configuration, ainsi que
- sur la base de la clé publique de la sous-station (20), qui est déjà mise en mémoire dans le terminal (33) du deuxième type de configuration.

10. Système (10) ayant au moins une sous-station (20, 50) et au moins un terminal (30-31, 60-61) raccordé à la sous-station (20, 50), le au moins un terminal (30-31, 60-61) étant équipé d'un certificat (EZ30, EZ31, EZ60-EZ61 de terminaux et d'une clé privée correspondante, qui
- rend possible une transmission de données signée,
- indique la sous-station (20, 50) comme émetteur de certificat d'un certification d'origine,
- a une signature de la sous-station (20, 50) et
- contient un renvoi à une clé publique du terminal,
dans lequel
- on fait fonctionner, comme système (10), un système de distribution d'énergie électrique,
- la sous-station (20, 50) est une sous-station de distribution d'énergie, le terminal (30-31, 60-61) forme un dispositif électrique de mesure de contrôle et/ou de protection et un poste (100) de commande forme un poste de commande de distribution d'énergie,
- après extension du système à la sous-station (20, 50) est raccordé le poste (100) de commande, qui sert, par le raccordement, de nouvelle autorité de certificat d'origine du système, qui a recertifié la clé publique de la sous-station (20, 50) par le fait qu'il a signé celui-ci comme un certificat émis par lui, et
- le au moins un terminal (30-31, 60-61) est conformé de manière à signer des données, qui doivent être transmises à un autre terminal (30-31, 60-61), à la sous-station (20, 50) et/ou au poste (100) de commande, par sa clé privée correspondant au certificat (EZ30, EZ31, EZ60-EZ61) de terminaux, qui indique la sous-station (20, 50) comme émetteur de certificat d'origine.

11. Système (10) suivant la revendication 10,
**caractérisé en ce que**
le poste (100) de commande est conformé de manière à effectuer le contrôle, du côté du poste de commande, du certificat de terminaux et/ou l'authentification des données signées par la clé privée correspondante, sur la base de la clé publique recertifiée de la sous-station (20, 50).
